# EUROPEAN PATENT APPLICATION

(11) **EP 0 958 994 A2**
(43) Date of publication of application: **24.11.1999**
(21) Application number: 99302823.2
(22) Date of filing: 12.04.1999
(51) Int. Cl.: B62D 25/20, B62D 29/04

(54) **Decking plank**

(30) Priority: 22.05.1998 GB 9810968
(71) Applicant: Bonnington Plastics Limited, Castle Donington, Nr. Derby, DE74 2NP (GB)
(72) Inventor: Fisher, Paul, Hoton, LE12 5SF (GB); Campbell, Colin, Loughborough, Leicestershire, LE11 2AH (GB)
(74) Representative: Swindell & Pearson

(57) **Abstract**

A decking plank (10) for a vehicle floor is made substantially completely from an extruded plastics material, which may be a polyolefinic plastics material such as polyethylene. The plastics material may include fibrous material, which may include glass or carbon fibres. The decking plank (10) includes a body portion (12) which is substantially rectangular in section and, on either side of the body portion, lateral protections (14). The planks (10) are locatable adjacent one another to form a level floor, with adjacent planks being located respectively different ways up.

## Description

The invention relates to a decking plank, particularly but not exclusively for a commercial vehicle floor.

Conventionally, floors of commercial transportation vehicles are constructed from hardwood planking or decking. The wood is relatively heavy and is also moisture absorbent, with the amount of moisture absorbed depending upon weather and road conditions. This can result in significant variations of the total weight of a vehicle depending upon the amount of water absorbed. A vehicle may exceed its permitted weight or may have to be consistently underloaded in order to avoid it exceeding its permitted weight in wet conditions.

According to the invention there is provided a decking plank for a floor, the plank being made at least partly from an extruded thermoplastics material.

Preferably the plank is for a commercial transportation vehicle floor.

Preferably the plank is made substantially completely from the extruded plastics material.

Preferably the plastics material is a polyolefinic plastics material. Preferably the plastics material is polyethylene, preferably high density polyethylene.

Preferably the plastics material includes a fibrous material, which may include glass or carbon fibres. The fibres advantageously make up between 5 and 50% of the material. Preferably the fibres make up between 25 and 35%, and most preferably about 30%, of the material.

Preferably the plank is elongate.

Preferably the plank includes means for overlapping a part of the plank with a part of an adjacent similar plank. Preferably adjacent planks may be fitted together in such overlapping relationship, such that adjacent faces of the planks lie in substantially the same respective planes. Preferably the adjacent planks may be so fitted together such that they are directed opposition ways up. Preferably upper faces of a plurality of such planks may form a flooring surface.

Preferably the plank is substantially symmetrical about a plane which passes centrally through first and second faces of the plank and extends along the length of the plank.

The plank may include a body portion and a projecting portion, the projecting portion being for overlapping a part of an adjacent plank. Preferably the body portion is elongate, having elongate first and second faces and elongate sides. The width of the faces may be greater than the depth of the sides. The body portion may be substantially rectangular in section.

The projecting portion may project from one of the sides of the body portion. Preferably a projecting portion projects from each side of the body portion. Preferably projecting portions of adjacent planks may overlap such that the sides of the body portions of the planks lie adjacent one another. Preferably when the projecting portions overlap in this way, adjacent planks lie opposite ways up.

The projecting portion is preferably elongate and preferably extends substantially along the length of the plank. The projecting portion may be substantially rectangular in section, preferably substantially square. The depth of the projecting portion is preferably approximately half the depth of the body portion. The projecting portion may include an outer face, which is substantially flush with a face of the body portion, and an inner face. When the projecting portions of adjacent planks overlap, preferably their respective inner faces lie adjacent one another. The inner face may include a recess, which may be elongate and may extend along the length of the inner face.

The projecting portion may include one or more indentations for locating a screw for securing adjacent planks together and/or to a vehicle.

The body portion may be substantially hollow, or may be filled with insulating material, such as foam. The body portion may include a plurality of elongate cavities separated by struts. The struts preferably extend between the first and second faces of the body portion, substantially perpendicular thereto. Preferably a plurality of struts are provided, spaced approximately evenly between the sides of the body portion.

The faces of the body portion preferably have a width of between 50mm and 200mm, most preferably between 80mm and 150mm. The sides of the body portion may have a depth of between 15mm and 50mm, preferably between 25mm and 30mm. The depth of the projecting portions may be between about 5mm and 25mm, preferably between 10mm and 15mm. The width of the projecting portions is preferably between 8mm and 20mm, most preferably between 10mm and 15mm.

The distance between the struts may be between 15mm and 30mm and is preferably between 18mm and 22mm.

The thickness of the extruded plastics material may be between 1mm and 5mm. Preferably the material of the faces of the body portion is thicker than that of its sides or struts.

The invention will now be described for the purposes of illustration only with reference to the accompanying drawings in which:
Fig. 1 is a diagrammatic cross-section through a plank according to a first embodiment of the invention;
Fig. 2 is a diagrammatic cross-section through two of the planks of Fig. 1 fitted together as they would be on a vehicle floor; and
Fig. 3 is a diagrammatic cross-section through a plank according to a second embodiment of the invention.

Corresponding reference numerals are used for corresponding features in the drawings.

Referring to the drawings, an elongate decking plank 10 for a vehicle floor includes a body portion 12 which is substantially rectangular in section and, on either side of the body portion, lateral projections 14. The body portion 12 and projections 14 are integrally moulded from high density polyethylene, incorporating 30% glass fibre material which is treated to ensure that it bonds fully with the polyethylene carrier.

The body portion 12 includes first and second faces 16, 18 respectively and sides 20 extending between the edges of the faces. The faces 16, 18 are about 90mm wide and the sides about 28mm deep. The body portion is hollow but incorporates struts 22 extending between the first and second faces 16, 18, perpendicular thereto. The struts 22 are approximately evenly spaced between the sides 20 about 20mm apart. The thickness of the first and second faces 16, 18 is about 3.5mm and the thickness of the struts is about 2mm.

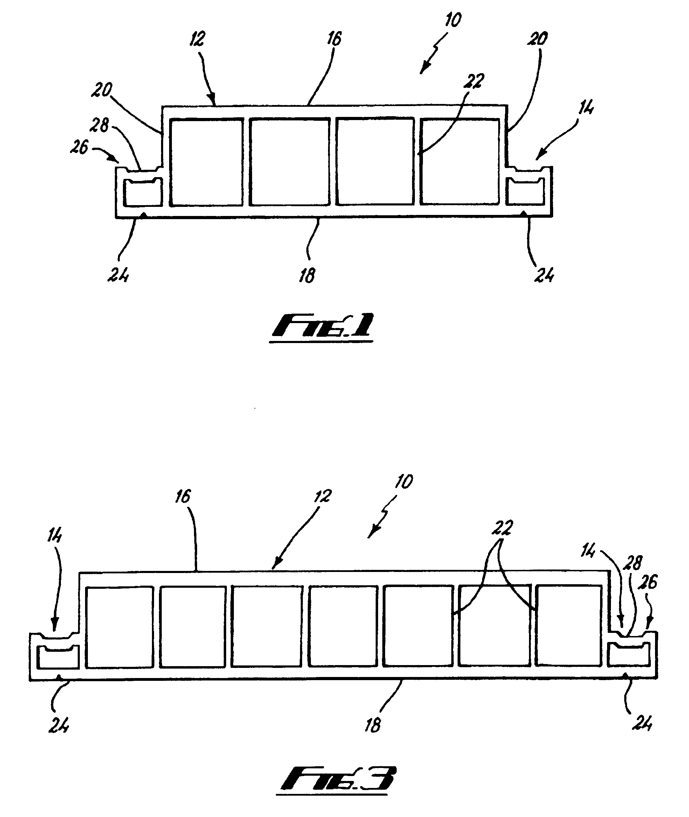

The projections 14 protrude beyond the sides 20 of the body portion 12 and extend along the entire length of the elongate plank 10. The projections 14 are approximately square in section and are hollow. The size of the projections is about 12.5mm square. An outer face 24 of each projection 14 is flush with the second face 18 of the body portion 12 (the lower face in Fig. 1), and the depth of the projection 14 is approximately half the depth of the body portion 12. An inner face 26 of each projection includes an elongate recess 28 which extends fully along the length of the projection 14.

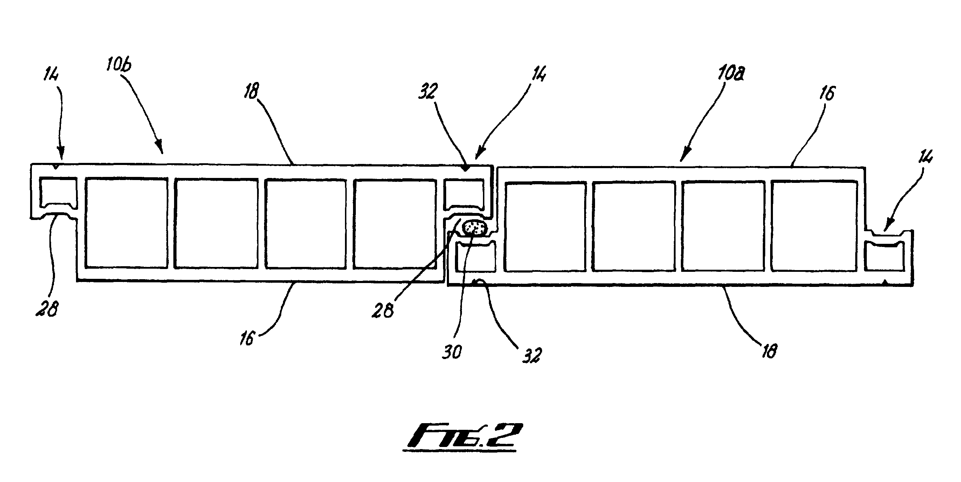

A number of planks 10 are assembled to form decking for a vehicle floor as illustrated in Fig. 2, which shows two such planks fitted together.

A first plank 10a is laid with its first face 16 facing upwards and its second face 18 facing downwards. The projections 14 are thus located towards the bottom of the plank 10a. A bead of sealant 30 is applied to the recess 28 on the inner face 26 of the projection 14. A second plank 10b is placed adjacent to the plank 10a but the opposite way up such that its first face 16 faces downwards and its projections 14 are located towards the top of the plank. The projections 14 of the two planks thus overlap and the two planks 10a, 10b fit together such that their faces 16 and 18 form a continuous surface. The first face 16 of one plank always lies in a common plane with the second face 18 of an adjacent plank.

The projections 14 include indentations 32 for locating screws (not shown). The screws retain the planks 10 together and hold them to the floor of a vehicle.

A plurality of such planks may be laid side to side, with their projections in overlapping engagement. Adjacent planks are always laid opposite ways up.

The planks are available in different widths and Fig. 3 shows an alternative, wider plank in section. The body portion 12 of this plank is approximately 140mm wide.

By using various different sizes of plank, a vehicle floor can be surfaced such that an odd number of planks are always used. In this way, the projections 14 can fit beneath the side rave and chassis top sections, without the necessity of sawing to width.

The planks may be produced to any desired length to fit a vehicle.

Planks are manufactured by extrusion. Using an oversized extrusion die of the form required, the extrudate is drawn down by about 25% in order to orientate the fibres in a longitudinal direction.

During this draw-down, the outer surface of the extrudate is slightly chilled with blown air prior to it entering a series of vacuum calibrators to produce the required dimensions.

The calibrators are approximately 2m in overall length and are cooled to approximately 5°C using a refrigerant. Additional water sprays are incorporated before and after the final calibrator to improve surface cooling.

By passing compressed air through the insulated cores of the die, additional surface cooling of the internal webs can be achieved.

The process is conducted at an extrusion rate which enables the inner webs to be cooled sufficiently to prevent surface distortion after the final calibrator.

There is thus provided a decking plank which is of a consistent relatively low weight. A plurality of the planks are easy to fit together to form a complete vehicle floor.

The material of the planks is recyclable; the planks may be granulated and extruded into further products.

Various modifications may be made to the above plank without departing from the scope of the invention. The plank may be made in a range of different basic shapes and sizes. The plank may be filled with an insulating material such as insulating foam for use in refrigerated vehicles.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A decking plank for the floor of a commercial transportation vehicle, the plank being made substantially completely from an extruded thermoplastics material.

2. A decking plank according to claim 1 wherein the plastics material is a polyolefinic plastics material.

3. A decking plank according to claim 1 or claim 2 wherein the plastics material includes a fibrous material.

4. A decking plank according to any preceding claim wherein the plank includes means for overlapping a part of the plank with a part of an adjacent similar plank.

5. A decking plank according to claim 4 wherein adjacent planks may be fitted together in such overlapping relationship, such that adjacent faces of the planks lie in substantially the same respective planes.

6. A decking plank according to claim 5 wherein the adjacent planks may be so fitted together such that they are directed opposite ways up.

7. A decking plank according to any preceding claim wherein the plank is elongate and is substantially symmetrical about a plane which passes centrally through first and second faces of the plank and extends along the length of the plank.

8. A plank according to claim 7 wherein the plank includes: an elongate body portion having elongate first and second faces and elongate sides; and an elongate projecting portion for overlapping a part of an adjacent plank.

9. A plank according to claim 8 wherein a projecting portion projects from each side of the body portion and wherein projecting portions of adjacent planks may overlap such that the sides of the body portions of the planks lie adjacent one another.

10. A decking plank according to claim 9 wherein when the projecting portions overlap in such a way, adjacent planks lie opposite ways up.

11. A decking plank according to claim 10 wherein the projecting portions are substantially rectangular in section, having outer faces which are substantially flush with a face of the body portion in use and inner faces, such that when projecting portions of adjacent planks overlap, the respective inner faces lie adjacent one another.

12. A decking plank according to claim 11 wherein the inner faces may include elongate recesses extending along the length of the inner faces.

13. A decking plank according to any of claims 8 to 12 wherein the body portion is substantially hollow, including a plurality of cavities separated by struts.
